# EUROPÄISCHE PATENTANMELDUNG

(11) **EP 1 648 070 A1**
(43) Veröffentlichungstag der Anmeldung: **19.04.2006**
(21) Anmeldenummer: 04405639.8
(22) Anmeldetag: 13.10.2004
(51) Int. Cl.: H02H 7/122

(54) **Verfahren zur Fehlerbehandlung in einer Umrichterschaltung zur Schaltung von zwei Spannungsniveaus**

(71) Anmelder: ABB Schweiz AG, 5400 Baden (CH)
(72) Erfinder: Knapp, Gerold, 5422 Oberehrendingen (CH)
(74) Vertreter: ABB Patent Attorneys

(57) **Zusammenfassung**

Es wird ein Verfahren zur Fehlerbehandlung in einer Umrichterschaltung zur Schaltung von zwei Spannungsniveaus angegeben, bei dem die Umrichterschaltung mindestens zwei Teilumrichtersysteme (1) und einen Gleichspannungskreis (2) umfasst und die Teilumrichtersysteme (1) zueinander und zu dem Gleichspannungskreis (2) parallel geschaltet sind, wobei jedes Teilumrichtersystem (1) zwei in Serie geschaltete ansteuerbare Leistungshalbleiterschalter (S1, S2) aufweist. Verfahrensmässig wird jeder ansteuerbare Leistungshalbleiterschalter (S1, S2) auf Entsättigung hin überwacht und bei einer Entsättigung abgeschaltet. Zur Vermeidung eines totalen, bzw. allphasigen phasenseitigen Kurzschlusses der Umrichterschaltung und zur Erreichung eines sicheren Betriebszustandes der Umrichterschaltung im Fehlerfall sowie zur Reduzierung der Belastung der Leistungshalbleiterschalter (S1, S2) im Fehlerfall wird bei einer Entsättigung eines ansteuerbaren Leistungshalbleiterschalters (S1, S2) eines Teilumrichtersystems (1) der andere ansteuerbare Leistungshalbleiterschalter (S1, S2) desselben Teilumrichtersystems (1) eingeschaltet und die ansteuerbaren Leistungshalbleiterschalter (S1, S2) des oder der weiteren Teilumrichtersysteme (1) werden abgeschaltet.

## Beschreibung

### Technisches Gebiet

Die Erfindung bezieht sich auf das Gebiet Ansteuerverfahren von Umrichterschaltungen. Sie geht aus von einem Verfahren zur Fehlerbehandlung in einer Umrichterschaltung zur Schaltung von zwei Spannungsniveaus gemäss dem Oberbegriff des Anspruchs 1.

### Stand der Technik

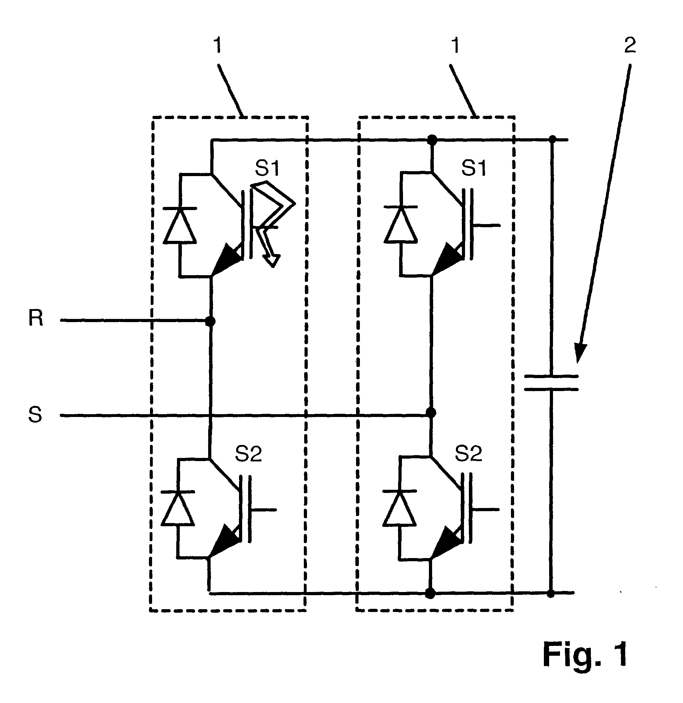

Leistungshalbleiterschalter werden derzeit vermehrt in der Umrichtertechnik und insbesondere in Umrichterschaltungen zur Schaltung von zwei Spannungsniveaus eingesetzt. Eine solche Umrichterschaltung zur Schaltung von zwei beziehungsweise drei Spannungsniveaus ist in der DE 699 02 227 T2 angegeben. In Fig. 1 ist eine herkömmliche Umrichterschaltung zur Schaltung von zwei Spannungsniveaus, insbesondere für zwei Phasen, gezeigt, wobei die in Fig. 1 gezeigte Umrichterschaltung der in DE 699 02 227 T2 gezeigten Umrichterschaltung entspricht. Gemäss Fig. 1 sind bei der Umrichterschaltung mindestens zwei Teilumrichtersysteme und einen Gleichspannungskreis vorgesehen, wobei die Teilumrichtersysteme zueinander und zu dem Gleichspannungskreis parallel geschaltet sind. Ein solches Teilumrichtersystem ist für jede Phase vorgesehen. Jedes Teilumrichtersystem weist weiterhin zwei in Serie geschaltete ansteuerbare Leistungshalbleiterschalter auf, wobei der jeweilige ansteuerbare Leistungshalbleiterschalter durch einen Bipolartransistor mit isoliert angeordneter Gateelektrode (IGBT) gebildet ist. Zu dem Bipolartransistor ist weiterhin antiparallel eine Diode geschaltet, so dass insgesamt ein ansteuerbarer bidirektionaler Leistungshalbleiterschalter gebildet ist. Ein vorstehend genannter IGBT ist typischerweise aus mehreren parallel geschalteten Halbleiterchips aufgebaut, welche jeweils mit Bondingdrähten zur Anode beziehungsweise zur Kathode des IGBT kontaktiert sind.

In der DE 699 02 227 T2 ist weiterhin ein Verfahren zur Fehlerbehandlung in einer Umrichterschaltung zur Schaltung von zwei Spannungsniveaus angegeben. Zuerst wird bei einem auftretenden Fehler, beispielsweise aufgrund eines fehlerhaften ansteuerbaren Leistungshalbleiterschalters, detektiert, in welchem ansteuerbaren Leistungshalbleiterschalter sich der Fehler befindet. Dazu wird jeder ansteuerbare Leistungshalbleiterschalter auf Entsättigung hin überwacht und bei einer auftretenden Entsättigung abgeschaltet. Die Überwachung eines jeden Leistungshalbleiterschalters auf Entsättigung mittels einer Entsättigungsüberwachungseinrichtung ist dazu nötig. Eine solche Entsättigung an einem der Leistungshalbleiterschalter eines Teilumrichtersystems, insbesondere an einem IGBT, tritt beispielsweise dann ein, wenn ein Fehler, wie z.B. ein Kurzschluss, im anderen ansteuerbaren Leistungshalbleiterschalter desselben Teilumrichtersystems auftritt. Andere Fehler sind selbstverständlich auch denkbar. Nach der Abschaltung des oder der entsättigten ansteuerbaren Leistungshalbleiterschalter werden dann die ansteuerbaren Leistungshalbleiterschalter derart geschaltet, dass ein Phasenkurzschluss in jedem Teilumrichtersystem entsteht, d.h. die Umrichterschaltung ist dann an jeder seiner Phasen kurzgeschlossen und es bildet sich ein Kurzschlussstrom aus.

Problematisch bei einem Verfahren zur Fehlerbehandlung in einer Umrichterschaltung zur Schaltung von zwei Spannungsniveaus nach der DE 699 02 227 T2 ist, dass sich die Bondingdrähte an einem oder mehreren Halbleiterchips des fehlerhaften ansteuerbaren Leistungshalbleiterschalters, insbesondere des IGBT, aufgrund von Überhitzung aufschmelzen können und sich ein Lichtbogen ausbilden kann. Der Lichtbogen wird durch den Kurzschlussstrom, insbesondere den halbperiodischen Kurzschlussstrom, der zugehörigen und durch den fehlerhaften ansteuerbaren Leistungshalbleiterschalter kurzgeschlossenen Phase sowie durch die zudem kurzgeschlossenen anderen Phasen gespeist. Aufgrund dieses Lichtbogens und da der vom Fehler nicht betroffene, entsättigte und abgeschaltete ansteuerbare Leistungshalbleiterschalter die gesamte Gleichspannung des Gleichspannungskreises sperren muss, entsteht am vom Fehler nicht betroffenen, entsättigten und abgeschalteten ansteuerbaren Leistungshalbleiterschalter ein unzulässig hoher Spannungsanstieg beziehungsweise eine unzulässige Überspannung. Ein derart belasteter ansteuerbarer Leistungshalbleiterschalter kann dadurch beschädigt oder, wie in den meisten Fällen, zerstört werden, so dass die Verfügbarkeit der Umrichterschaltung stark beeinträchtigt oder schlimmstenfalls nicht mehr gegeben ist.

Allgemein ist somit bei einem Verfahren zur Fehlerbehandlung in einer Umrichterschaltung zur Schaltung von zwei Spannungsniveaus nach der DE 699 02 227 T2 ein Kurzschluss sämtlicher Phasen je nach Anwendung nicht erwünscht. Dies vor allem dann, wenn externe Massnahmen zur Kurzschlussbehandlung getroffen werden, um eine hohe Halbleiterbelastung zu verhindern. Zudem bedarf die in der DE 699 02 227 T2 gezeigte allphasige Kurzschlusshandlung eines Eingreifens der Stromrichterleittechnik, welche den Fehler in einer Phase detektieren und die Reaktion an alle übrigen Phasen weiterleiten muss, was einen zusätzlichen Steuerungsaufwand bedeutet.

### Darstellung der Erfindung

Aufgabe der Erfindung ist es deshalb, ein Verfahren zur Fehlerbehandlung in einer Umrichterschaltung zur Schaltung von zwei Spannungsniveaus anzugeben, welches im wesentlichen ohne einen phasenseitigen Kurzschluss sämtlicher Phasen der Umrichterschaltung zur Erreichung eines sicheren Betriebszustandes der Umrichterschaltung im Fehlerfall auskommt und welches die Leistungshalbleiterschalter wenig belastet. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zur Fehlerbehandlung in einer Umrichterschaltung zur Schaltung von zwei Spannungsniveaus umfasst die Umrichterschaltung mindestens zwei Teilumrichtersysteme und einen Gleichspannungskreis. Die Teilumrichtersysteme sind zueinander und zu dem Gleichspannungskreis parallel geschaltet, wobei jedes Teilumrichtersystem zwei in Serie geschaltete ansteuerbare Leistungshalbleiterschalter aufweist. Verfahrensmässig wird darüber hinaus jeder ansteuerbare Leistungshalbleiterschalter auf Entsättigung hin überwacht und bei einer Entsättigung abgeschaltet. Erfindungsgemäss wird bei einer Entsättigung eines ansteuerbaren Leistungshalbleiterschalters eines Teilumrichtersystems der andere, d.h. der seriell geschaltete, ansteuerbare Leistungshalbleiterschalter desselben Teilumrichtersystems eingeschaltet, wobei die ansteuerbaren Leistungshalbleiterschalter des oder der weiteren Teilumrichtersysteme zudem abgeschaltet werden. Durch die Entsättigung eines ansteuerbaren Leistungshalbleiterschalters eines Teilumrichtersystems ist der seriell geschaltete ansteuerbare Leistungshalbleiterschalter desselben Teilumrichtersystems der fehlerbehaftete ansteuerbare Leistungshalbleiterschalter. Durch das erfindungsgemässe Einschalten des fehlerbehafteten ansteuerbaren Leistungshalbleiterschalters wird vorteilhaft erreicht, dass der sich ausbildende, halbperiodische Kurzschlussstrom auch durch den fehlerbehafteten ansteuerbaren Leistungshalbleiterschalter über Bondingdrähte noch funktionierender und typischerweise parallel geschalter Halbleiterchips des ansteuerbaren Leistungshalbleiterschalters fliessen kann, damit dem Kurzschlussstrom viele parallele Strompfade zur Verfügung stehen. Dadurch kann das Auftreten eines Lichtbogens am Halbleiterchip selbst oder an aufschmelzenden Bondingdrähten mit Vorteil weitestgehend vermieden werden, so dass somit auch im wesentlichen keine unzulässig hohe Spannungsanstiegsgeschwindigkeit beziehungsweise im wesentlichen keine unzulässige Überspannung am vom Fehler nicht betroffenen, entsättigten und abgeschalteten ansteuerbaren Leistungshalbleiterschalter desselben Teilumrichtersystems auftritt. Ein Folgefehler des vom Fehler nicht betroffenen, entsättigten und abgeschalteten ansteuerbaren Leistungshalbleiterschalters desselben Teilumrichtersystems kann somit vorteilhaft verhindert werden. Ein Kurzschluss des Gleichspannungskreises der gesamten Umrichterschaltung kann zudem verhindert werden, wodurch die Belastung der Umrichterschaltung und die Wiederinstandstellungskosten verringert werden. Insgesamt erhöht sich damit die Verfügbarkeit der Umrichterschaltung.

Mittels der zusätzlichen Abschaltung der ansteuerbaren Leistungshalbleiterschalter des oder der weiteren Teilumrichtersysteme, welche nicht vom Fehler betroffen sind, wird verhindert, dass weitere ansteuerbare Leistungshalbleiterschalter den sich im Steigen befindlichen Kurzschlussstrom gemäss der betriebsmässigen Schaltsequenz schalten und somit einem erhöhten Fehlerrisiko ausgesetzt sind. Insgesamt kann durch die erfindungsgemässe Einschaltung des fehlerbehafteten ansteuerbaren Leistungshalbleiterschalters und der zusätzlichen Abschaltung der ansteuerbaren Leistungshalbleiterschalter des oder der weiteren Teilumrichtersysteme, welche nicht vom Fehler betroffen sind, erreicht werden, dass das vom Fehler betroffene Teilumrichtersystem und damit die ganze Umrichterschaltung in einen sicheren Betriebszustand versetzt wird.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigt:
- Fig. 1: eine herkömmliche Umrichterschaltung zur Schaltung von zwei Spannungsniveaus.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebenen Ausführungsformen der Erfindung stehen beispielhaft für den Erfindungsgegenstand und hat keine beschränkende Wirkung.

### Wege zur Ausführung der Erfindung

In Fig. 1 ist die bereits eingangs detailliert beschriebene herkömmliche Umrichterschaltung zur Schaltung von zwei Spannungsniveaus gezeigt, wobei die Umrichterschaltung nach Fig. 1 beispielhaft zwei Phasen R, S aufweist. Die Umrichterschaltung zur Schaltung von zwei Spannungsniveaus umfasst mindestens zwei Teilumrichtersysteme 1 und einen Gleichspannungskreis 2. Der Gleichspannungskreis 2 ist gemäss Fig. 1 beispielhaft durch einen Kondensator gebildet. Die Teilumrichtersysteme 1 sind zueinander und zu dem Gleichspannungskreis 2 parallel geschaltet, wobei jedes Teilumrichtersystem 1 zwei in Serie geschaltete ansteuerbare Leistungshalbleiterschalter S1, S2 aufweist. Ein solches Teilumrichtersystem 1 ist gemäss Fig. 1 für jede Phase R, S vorgesehen. Der jeweilige ansteuerbare Leistungshalbleiterschalter S1, S2 ist insbesondere durch einen Bipolartransistor mit isoliert angeordneter Gateelektrode (IGBT) gebildet, wobei eine zu dem Bipolartransistor antiparallel geschaltete Diode vorgesehen ist. Es ist aber auch denkbar einen vorstehend genannten ansteuerbaren Leistungshalbleiterschalter S1, S2 beispielsweise als Leistungs-MOSFET auszubilden, dem dann zusätzlich eine Diode antiparallel geschaltet ist. Solche vorstehend genannten ansteuerbaren Leistungshalbleiterschalter S1, S2, insbesondere IGBTs, sind normalerweise aus mehreren parallel geschalteten Halbleiterchips aufgebaut, welche Halbleiterchips dann jeweils mit Bondingdrähten zur Anode beziehungsweise Kathode des ansteuerbaren Leistungshalbleiterschalters S1, S2 kontaktiert sind.

Beim erfindungsgemässen Verfahren wird jeder ansteuerbare Leistungshalbleiterschalter S1, S2 auf Entsättigung hin überwacht und bei einer Entsättigung abgeschaltet. Die Entsättigung eines ansteuerbaren Leistungshalbleiterschalters S1, S2 eines Teilumrichtersystems 1 ist ein Hinweis darauf, dass der zu dem entsättigten ansteuerbaren Leistungshalbleiterschalter S1, S2 seriell geschaltete ansteuerbare Leistungshalbleiterschalter S1, S2 desselben Teilumrichtersystems 1 fehlerbehaftet ist und beispielsweise einen Kurzschluss aufweist. In Fig. 1 ist beispielhaft der Fall dargestellt, bei welchem der erste ansteuerbare Leistungshalbleiterschalter S1 des Teilumrichtersystems 1 der Phase R einen Fehler aufweist und trotz der Abschaltung dieses ersten ansteuerbaren Leistungshalbleiterschalters S1 nicht in den sperrenden Zustand gekommen ist. Der zweite, seriell zum ersten geschaltete ansteuerbare Leistungshalbleiterschalter S2 des Teilumrichtersystems 1 der Phase R wird demnach beim nächsten Einschalten einen Kurzschlusspfad über beide in Serie zueinander geschalteten ansteuerbaren Leistungshalbleiterschalter S1, S2 öffnen und in dessen Folge entsättigen. Erfindungsgemäss wird nun allgemein bei einer Entsättigung eines ansteuerbaren Leistungshalbleiterschalters S1, S2 eines Teilumrichtersystems 1 der andere ansteuerbare Leistungshalbleiterschalter S1, S2 desselben Teilumrichtersystems 1, d.h. der seriell geschaltete ansteuerbaren Leistungshalbleiterschalters S1, S2 desselben Teilumrichtersystems 1, eingeschaltet, wobei die ansteuerbaren Leistungshalbleiterschalter S1, S2 des oder der weiteren Teilumrichtersysteme 1 abgeschaltet werden. Am Beispielfall gemäss Fig. 1 heisst das, dass der fehlerbehaftete abgeschaltete ansteuerbare Leistungshalbleiterschalter S1 des Teilumrichtersystems 1 der Phase R wieder eingeschaltet wird und der erste und zweite ansteuerbare Leistungshalbleiterschalter S1, S2 des Teilumrichtersystems 1 der Phase S abgeschaltet werden. Der zweite ansteuerbare Leistungshalbleiterschalter S2 des Teilumrichtersystems 1 der Phase R ist bereits aufgrund seiner Entsättigung abgeschaltet worden.

Durch das erfindungsgemässe Einschalten des fehlerbehafteten ansteuerbaren Leistungshalbleiterschalters S1, S2 wird vorteilhaft erreicht, dass der sich ausbildende halbperiodische Kurzschlussstrom auch im fehlerbehafteten ansteuerbaren Leistungshalbleiterschalter S1, S2 über möglichst viele Bondingdrähte beziehungsweise noch funktionierende Halbleiterchips des ansteuerbaren Leistungshalbleiterschalters S1, S2 fliessen kann, damit dem Kurzschlussstrom im fehlerbehafteten ansteuerbaren Leistungshalbleiterschalter S1, S2 möglichst viele parallele Strompfade zur Verfügung stehen. Damit kann das Auftreten eines Lichtbogens an eventuell aufgeschmolzenen Bondingdrähten mit Vorteil weitestgehend vermieden werden, so dass somit auch im wesentlichen keine unzulässig hohe Spannungsanstiegsgeschwindigkeit beziehungsweise im wesentlichen keine unzulässige Überspannung am vom Fehler nicht betroffenen, entsättigten und abgeschalteten ansteuerbaren Leistungshalbleiterschalter S1, S2 desselben Teilumrichtersystems 1 auftritt. Ein Kurzschluss des Gleichspannungskreises als Folge kann damit vorteilhaft verhindert werden, wodurch grössere Schäden an der Umrichterschaltung durch die unkontrollierte Entladung des Gleichspannungskreises vermieden werden. Die Beschädigung des vom Fehler nicht betroffenen, entsättigten und abgeschalteten ansteuerbaren Leistungshalbleiterschalters S1, S2 desselben Teilumrichtersystems 1 kann damit vorteilhaft weitestgehend verhindert werden. Dies bedeutet auch, dass sich die Verfügbarkeit der Umrichterschaltung insgesamt erhöht.

Mittels der zusätzlichen Abschaltung der ansteuerbaren Leistungshalbleiterschalter S1, S2 des oder der weiteren Teilumrichtersysteme 1, welche nicht vom Fehler betroffen sind, wird verhindert, dass weitere ansteuerbare Leistungshalbleiterschalter S1, S2 den sich im Steigen befindlichen Kurzschlussstrom gemäss der betriebsmässigen Schaltsequenz schalten und somit einem erhöhten Fehlerrisiko ausgesetzt sind. Das oder die weiteren Teilumrichtersysteme 1 bleiben insbesondere bis zum Wegschalten des den Kurzschlussstrom treibenden und üblicherweise an die Phasen R, S angeschlossenen elektrischen Wechselspannungsnetzes in ihrem Status eingefroren.

Insgesamt kann durch die erfindungsgemässe Einschaltung des fehlerbehafteten ansteuerbaren Leistungshalbleiterschalters S1, S2 und der zusätzlichen Abschaltung der ansteuerbaren Leistungshalbleiterschalter S1, S2 des oder der weiteren Teilumrichtersysteme 1, welche nicht vom Fehler betroffen sind, erreicht werden, dass das vom Fehler betroffene Teilumrichtersystem 1 und damit die ganze Umrichterschaltung in einen sicheren Betriebszustand versetzt wird.

Da in heute üblichen Umrichterschaltungen die Ansteuerungseinheiten beider in Serie geschalteter ansteuerbarer Leistungshalbleiterschalter S1, S2 in einer einzigen Ansteuereinheit integriert sind, kann die Detektion des Fehlers (Entsättigung) und die erfindungsgemässe Einschaltung des fehlerhaften ansteuerbaren Leistungshalbleiterschalters S1, S2 vorteilhafterweise direkt auf Ebene der Ansteuereinheit vorgenommen werden, so dass dies ohne zusätzlichen Informationsaustausch mit der gängigen Stromrichterleittechnik auskommt. Der Steuerungsaufwand reduziert sich damit signifikant.

Vorzugsweise erfolgt die Einschaltung des fehlerbehafteten ansteuerbaren Leistungshalbleiterschalters S1, S2 in der Grössenordnung von 2µs bis 10ms nach Auftreten der Entsättigung des vom Fehler nicht betroffenen ansteuerbaren Leistungshalbleiterschalter S1, S2 desselben Teilumrichtersystems 1. Die Einschaltung erfolgt damit zeitlich schnell genug, um den Kurzschlussstrom durch den fehlerbehafteten ansteuerbaren Leistungshalbleiterschalter S1, S2 über möglichst viele Bondingdrähte beziehungsweise noch funktionierende Halbleiterchips des ansteuerbaren Leistungshalbleiterschalters S1, S2 fliessen zu lassen und das Auftreten eines Lichtbogens an eventuell aufgeschmolzenen Bondingdrähten schlussendlich möglichst zu vermieden.

Vorzugsweise erfolgt die Abschaltung der ansteuerbaren Leistungshalbleiterschalter S1, S2 des oder der weiteren Teilumrichtersysteme 1, d.h. des oder der Teilumrichtersysteme 1, welche nicht vom Fehler betroffen sind, unmittelbar bei Auftreten der Entsättigung, maximal jedoch wenige Millisekunden nach Auftreten der Entsättigung eines ansteuerbaren Leistungshalbleiterschalters S1, S2 eines Teilumrichtersystems 1. Die Abschaltung der ansteuerbaren Leistungshalbleiterschalter S1, S2 des oder der weiteren Teilumrichtersysteme 1 weitestgehend unmittelbar bei Auftreten der Entsättigung eines ansteuerbaren Leistungshalbleiterschalters S1, S2 eines Teilumrichtersystems 1 bewirkt vorteilhaft, dass sich der Kurzschlussstromanteil, welcher üblicherweise durch kurzgeschlossene Phasen R, S gespeist werden würde, auf einfache Weise und schnell und damit effektiv verhindern lässt. Die Möglichkeit des Auftretens des Lichtbogens an eventuell aufgeschmolzenen Bondingdrähten an einem Halbleiterchip des fehlerhaften ansteuerbaren Leistungshalbleiterschaltes S1, S2 eines Teilumrichtersystems 1 ist damit sehr gering, so dass die Möglichkeit des Auftretens einer unzulässig hohen Spannungsanstiegsgeschwindigkeit beziehungsweise einer unzulässigen Überspannung am vom Fehler nicht betroffenen, entsättigten und abgeschalteten ansteuerbaren Leistungshalbleiterschalter S1, S2 desselben Teilumrichtersystems 1 ebenfalls sehr gering ist.

Es hat sich als vorteilhaft erwiesen, dass der eingeschaltete ansteuerbare Leistungshalbleiterschalter S1, S2, bei welchem es sich um den fehlerhaften ansteuerbaren Leistungshalbleiterschalter S1, S2 handelt, für eine wählbare Zeitdauer tₑ eingeschaltet bleibt. Dadurch wird gewährleistet, dass der Kurzschlussstrom über die vielen parallelen Strompfade noch funktionierender Halbleiterchips des fehlerhaften ansteuerbaren Leistungshalbleiterschalters S1, S2 fliessen kann, bis der typischerweise vorgesehene, in Fig. 1 aber der Übersichtlichkeit halber nicht dargestellte Phasentrennschalter der Umrichterschaltung ein an die Phasen R, S üblicherweise angeschlossenes elektrisches Wechselspannungsnetz von den Phasen R, S, durch Öffnung des Phasentrennschalters abtrennt. Ist durch das Auftreten des Fehlers im fehlerbehafteten ansteuerbaren Leistungshalbleiterschalter S1, S2 ein zusätzlicher Kurzschluss der Ansteuerungseinheit des defekten Halbleiterchips erfolgt (Gate-Emitter Kurzschluss), so wird durch die wählbare, d.h. limitierte Zeitdauer tₑ die Ansteuerungseinheit der zugehörigen Halbleiterchips nicht, wie sonst durchaus üblich, überlastet.

Vorzugsweise wird die Zeitdauer tₑ in der Grössenordnung von 100ms bis 500ms gewählt. Danach nämlich ist sichergestellt, dass der Phasentrennschalter der Umrichterschaltung geöffnet wurde, die Phasen R, S vom elektrischen Wechselspannungsnetz abgetrennt sind und die Ströme im betrachteten Teilumrichtersystem 1 auf Null abgeklungen sind. Daraufhin lassen sich dann Wartungs- beziehungsweise Prüf- oder Reparaturarbeiten an der Umrichterschaltung, insbesondere am fehlerbehafteten ansteuerbaren Leistungshalbleiterschalter S1, S2 durchführen.

### Bezugszeichenliste

- 1: Teilumrichtersystem
- 2: Gleichspannungskreis
- S1: erste Leistungshalbleiterschalter
- S2: zweiter Leistungshalbleiterschalter
- R, S: Phasen

## Patentansprüche

1. Verfahren zur Fehlerbehandlung in einer Umrichterschaltung zur Schaltung von zwei Spannungsniveaus, bei dem die Umrichterschaltung mindestens zwei Teilumrichtersysteme (1) und einen Gleichspannungskreis (2) umfasst und die Teilumrichtersysteme (1) zueinander und zu dem Gleichspannungskreis (2) parallel geschaltet sind, wobei jedes Teilumrichtersystem (1) zwei in Serie geschaltete ansteuerbare Leistungshalbleiterschalter (S1, S2) aufweist, und
bei dem jeder ansteuerbare Leistungshalbleiterschalter (S1, S2) auf Entsättigung hin überwacht wird und bei einer Entsättigung abgeschaltet wird,
**dadurch gekennzeichnet,**
**dass** bei einer Entsättigung eines ansteuerbaren Leistungshalbleiterschalters (S1, S2) eines Teilumrichtersystems (1) der andere ansteuerbare Leistungshalbleiterschalter (S1, S2) desselben Teilumrichtersystems (1) eingeschaltet wird, und
**dass** die ansteuerbaren Leistungshalbleiterschalter (S1, S2) des oder der weiteren Teilumrichtersysteme (1) abgeschaltet werden.

2. Verfahren nach Anspruch 1, **dadurch gekennzeichnet, dass** die Einschaltung in der Grössenordnung von 2µs bis 10ms nach Auftreten der Entsättigung erfolgt.

3. Verfahren nach Anspruch 1 oder 2, **dadurch gekennzeichnet, dass** die Abschaltung der ansteuerbaren Leistungshalbleiterschalter (S1, S2) des oder der weiteren Teilumrichtersysteme (1) weitestgehend unmittelbar bei Auftreten der Entsättigung eines ansteuerbaren Leistungshalbleiterschalters (S1, S2) eines Teilumrichtersystems (1) erfolgt.

4. Verfahren nach einem der Ansprüche 1 bis 3, **dadurch gekennzeichnet, dass** der eingeschaltete ansteuerbare Leistungshalbleiterschalter (S1, S2) für eine wählbare Zeitdauer (tₑ) eingeschaltet bleibt.

5. Verfahren nach Anspruch 4, **dadurch gekennzeichnet, dass** die Zeitdauer (tₑ) in der Grössenordnung von 100ms bis 500ms gewählt wird.
